Europäisches Patentamt

European Patent Office

Office européen des brevets

(11) Numéro de publication: **0 376 250 B1**

# (12) FASCICULE DE BREVET EUROPEEN

(45) Date de publication de fascicule du brevet: **22.06.94** (51) Int. Cl.5: **H04L 25/03**

(21) Numéro de dépôt: **89123959.2**

(22) Date de dépôt: **27.12.89**

(54) **Dispositif d'égalisation auto-adaptative pour installation de démodulation différentiellement cohérente.**

(30) Priorité: **30.12.88 FR 8817507**

(43) Date de publication de la demande:
**04.07.90 Bulletin 90/27**

(45) Mention de la délivrance du brevet:
**22.06.94 Bulletin 94/25**

(84) Etats contractants désignés:
**BE CH DE ES FR GB IT LI NL SE**

(56) Documents cités:
**US-A- 4 097 807**
**US-A- 4 140 974**

**1987 IEEE INTERNATIONAL SYMPOSIUM ON CIRCUITS AND SYSTEMS, Philadelphia, PA, 4-7 mai 1987, vol. 2, pages 422-425, IEEE, New York, US; J.B. EVANS et al.: "Variable step size methods for the LMS adaptive algorithm"**

**IEEE 1974 INTERNATIONAL CONFERENCE ON COMMUNICATIONS, Minneapolis, Minnesota, 17-19 juillet 1974, pages 25D-1-25D-5, IEEE, New York, US; W.J. BARKSDALE et al.: "A linear digital equalizer for fast initialization"**

(73) Titulaire: **ALCATEL TELSPACE**
**5, rue Noel Pons**
**F-92734 Nanterre Cédex(FR)**

(84) Etats contractants désignés:
**DE ES FR GB IT NL SE**

(73) Titulaire: **ALCATEL N.V.**
**Strawinskylaan 341,**
**(World Trade Center)**
**NL-1077 XX Amsterdam(NL)**

(84) Etats contractants désignés:
**BE CH LI**

(72) Inventeur: **Sehier, Philippe**
**148, rue du Président Wilson**
**F-92300 Levallois Perret(FR)**
Inventeur: **Kawas Kaleh, Ghassan Alcatel**
**Transmission**
**Par Faisceaux Hertziens A.T.F.H.**
**55, rue Greffulhe**
**F-92301 Levallois Perret Cedex(FR)**

(74) Mandataire: **Weinmiller, Jürgen et al**
**Lennéstrasse 9**
**Postfach 24**
**D-82336 Feldafing (DE)**

Rank Xerox (UK) Business Services
(3.10/3.09/3.3.3)

## Description

La présente invention se rapporte à un dispositif d'égalisation auto-adaptative pour installation de démodulation différentiellement cohérente, plus souvent appelée "démodulation différentielle". Elle s'applique en particulier à la transmission numérique de messages au travers d'un canal à multi-trajets, de transmittance inconnue à priori, créant de l'interférence inter-symboles sur le message reçu, par exemple à la transmission numérique par faisceaux hertziens sur canal troposphérique. Elle est applicable aux installations qui utilisent une modulation linéaire démodulable en différentiel, telle que la MDP2 (modulation de phase à deux états) et la MDP4 (modulation de phase à quatre états), et avantageusement pour des récepteurs pouvant fonctionner en diversité.

La présence d'interférence inter-symboles à tendance à dégrader de façon importante les performances du récepteur utilisé dans une transmission numérique par faisceau hertzien. Pour remédier à cet effet, il est connu, dans le cas de la modulation cohérente, d'utiliser la technique de l'égalisation auto-adaptative en faisant usage d'un filtre auto-adaptatif placé après le démodulateur.

L'égalisation auto-adaptative est une technique connue qui consiste à faire passer le signal reçu dans un filtre auto-adaptatif dont la fonction est de diminuer au mieux l'interférence inter-symboles. Ce filtre, dans les dispositifs connus, est à réponse impulsionnelle finie pour les égaliseurs dits "linéaires". Il se décompose en deux parties pour les égaliseurs dits "à retour de décisions" : une partie agissant sur le signal reçu et l'autre partie agissant sur les symboles décidés. Dans les systèmes les plus répandus, car les plus simples, le critère d'optimisation du filtre est la minimisation de l'erreur quadratique moyenne, et les coefficients du filtre sont actualisés par l'algorithme du gradient stochastique.

En démodulation cohérente, l'algorithme permettant l'adaptation des coefficients est bien connu, et il existe de nombreux systèmes réalisés à ce jour.

L'inconvénient de la démodulation cohérente est la nécessité d'estimer la phase du signal reçu : cette estimation est particulièrement difficile à réaliser, car les canaux considérés génèrent des variations rapides de phase pouvant entraîner un décrochage du récepteur.

Une solution pour éviter cette estimation de phase est d'utiliser la démodulation différentiellement cohérente, plus couramment appelée "démodulation différentielle". Selon cette technique, l'échantillon précédent sert de référence de phase (bruitée) à l'échantillon de signal traité. On obtient alors une simplification des récepteurs, au prit d'une dégradation théorique des performances en taux d'erreur.

De même qu'en démodulation cohérente, les performances de la démodulation différentielle sont dégradées lorsque le canal de transmission n'est pas parfait. Les essais d'égalisation auto-adaptative effectués jusqu'à ce jour se sont avérés infructueux, d'une part parce qu'il n'est pas possible de placer un filtre auto-adaptatif en sortie d'un démodulateur différentiel, et d'autre part parce que les algorithmes connus pour l'actualisation des coefficients du filtre ne sont pas applicables dans le cas d'un dispositif de démodulation différentielle. Le brevet américain n° 4.097.807 décrit un dispositif permettant de compenser les distorsions d'un signal empruntant un support de transmission affectant la phase et l'amplitude de ce signal. Ce dispositif utilise un filtre transverse, constituant un égaliseur temporel en démodulation cohérente, associé à un réseau de compensation de la phase du signal issu du filtre transverse, ce réseau étant associé à un détecteur d'erreur. Le détecteur d'erreur génère un signal d'erreur ayant une composante statique et une composante dynamique. La composante statique est utilisée pour controler le gain du filtre transverse alors que la composante dynamique est utilisée pour modifier la phase et l'amplitude du signal reçu qui varient rapidement. L'égaliseur temporel corrige les caractéristiques du canal de transmission et est supposé déjà être dans un état suffisamment bon pour que le réseau de compensation de la phase fonctionne correctement.

Ce document ne fait cependant pas apparaître de démodulateur différentiel et ne peut donc résoudre le problème posé par l'invention.

L'invention vise à remédier à cet inconvénient, en permettant d'étendre le principe de l'égalisation auto-adaptative à la démodulation différentielle, en vue d'améliorer les performances de la transmission en présence de canaux dispersifs. Elle se rapporte à cet effet à un dispositif d'égalisation auto-adaptative pour installation de démodulation différentiellement cohérente qui utilise, pour chaque voie de réception, un filtre auto-adaptatif, connu en soi, placé en amont du démodulateur différentiel équipant cette voie, ce filtre auto-adaptatif étant associé à un dispositif de calcul de ses coefficients qui reçoit l'erreur (e) provenant du dispositif de décision et de calcul d'erreur situé en aval de ce démodulateur différentiel, ainsi que le signal de sortie de ce filtre auto-adaptatif, et qui actualise, à chaque instant kT chaque coefficient $C_o(k)$, $C_1(k)$, $C_2(k)$,..., $C_i(k)$,..., de ce filtre auto-adaptatif, selon la formule suivante :
$C_i(k) = C_i(k - 1) - \mu . y(k - 1) . x(k - i)^* . e(k)$ dans laquelle : $C_i(k)$ est la valeur donnée à ce coefficient $(C_i)$ à l'instant kT ; $C_i(k - 1)$ est la valeur qu'avait prise ce même coefficient Ci à l'instant (k - 1)T ; $\mu$ est un nombre réel positif très inférieur à 1 et définissant la vitesse d'adaptation filtre ; y(k - 1) est la valeur du signal de sortie du filtre auto-adaptatif, ce signal étant échantillonné au rythme symbolique de période T, à l'instant (k - 1)T ; x(k - i) * étant la valeur complexe conjuguée de l'échantillon présent dans ce filtre à cet instant kT, et relatif à ce coefficient Ci, et e (k) étant l'erreur précitée (e) à cet instant kT.

De toute façon, l'invention sera bien comprise, et ses avantages et autres caractéristiques ressortiront, lors de la description suivante d'un exemple de réalisation d'un égaliseur auto-adaptatif en diversité 2 et en démodulation différentielle, en référence au dessin schématique annexé dans lequel :

- Figure 1 est un schéma synoptique d'ensemble de cet égaliseur auto-adaptatif ; et
- Figure 2 est un schéma synoptique d'un des deux filtres auto-adaptatifs utilisés dans l'égaliseur de la figure 1.

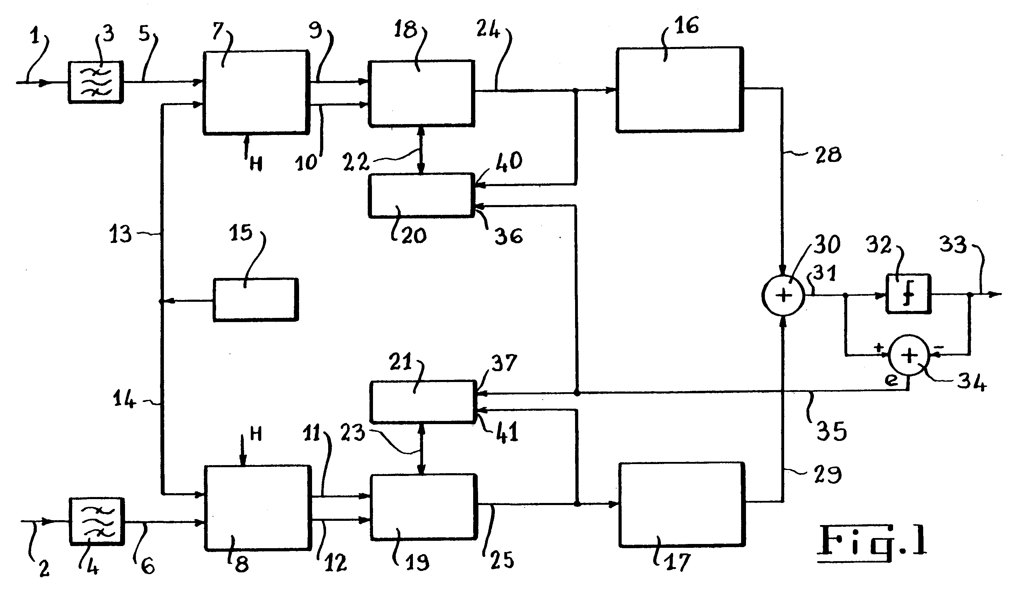

En se reportant tout d'abord à la figure 1, le signal, reçu et transposé en fréquence intermédiaire (à par exemple 70 Mégahertz), relatif à la première voie de diversité est appliqué en 1 à un filtre-réception 3. De même, le signal, reçu et transposé en fréquence intermédiaire, relatif à la deuxième voie de diversité, est appliqué en 2 à un autre filtre-réception 4. A ce stade, il s'agit, bien entendu, de signaux analogiques.

Ces signaux, présents en 5 et 6 respectivement, sont ensuite transposés en bande de base, c'est-à-dire, à fréquence porteuse nulle et numérisés selon deux voies en quadrature (respectivement 9, 10 et 11, 12), par deux dispositifs classiques respectifs 7 et 8. Chacun de ces dispositifs 7, 8 de transmission en bande de base et numérisation selon deux axes en quadrature, reçoit, outre le signal d'entrée (respectivement en 5 et 6), d'une part un signal d'horloge H (dont la période est dans cet exemple égale à l'espace inter-symboles T) et d'autre part (en 13 et 14 respectivement), un signal à fréquence fixe provenant d'un oscillateur local 15. Les signaux numérisés, en 9, 10 et 11, 12 respectivement, sont des symboles complexes, comme il est bien connu dans la théorie du signal.

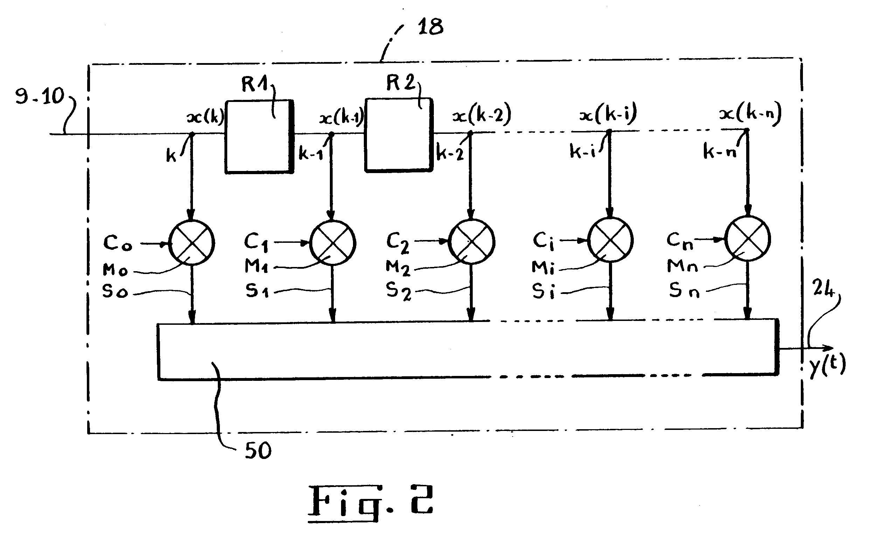

Conformément à un premier aspect de l'invention, les symboles complexes successifs, échantillonnés à T dans cet exemple particulier, présents sur les deux voies en quadrature précitées (9, 10 et 11, 12 respectivement), sont, avant démodulation par un démodulateur différentiel respectif 16, 17, passés chacun dans un filtre auto-adaptatif, respectivement 18 et 19, d'un modèle en soi très classique et d'ailleurs représenté sur la figure 2 qui sera décrite en détails ci-après.

Chacun de ces filtres auto-adaptatifs 18, 19 est relié de manière classique à un organe logique, respectivement 20 et 21, de calcul de ces coefficients Co, C1, C2,..., Ci,..., Cn (figure 2), par une liaison à double sens, respectivement 22 et 23.

Le signal numérique qui sort, en 24 et 25 respectivement, de chacun des filtres auto-adaptatifs 18 et 19, est ensuite appliqué au démodulateur différentiel précité, respectivement 16 et 17.

Les signaux respectifs, en sorties 28 et 29 des démodulateurs différentiels 16 et 17, sont ensuite combinés par passage dans un sommateur 30 (bien entendu, dans le cas d'une seule voie de diversité, ce combineur 30 n'existerait pas).

Le signal numérique sortant en 31 de cet additionneur 30 est ensuite appliqué au circuit de décision 32, dont la sortie 33 est celle de l'égaliseur auto-adaptatif de la figure 1.

Les signaux, en 31 et 33 respectivement, d'entrée et de sortie de l'organe de décision 32, sont soustraits dans un dispositif de calcul d'erreur 34, dont la sortie 35 est appliquée sur une entrée d'information, respectivement 36 et 37, de chacun des dispositifs logiques de calcul des coefficients précités, respectivement 20 et 21.

Ces organes 20, 21 de calcul des coefficients reçoivent en outre, sur encore une autre entrée d'information, respectivement 40 et 41, les signaux de sortie, en 24 et 25 respectivement, des filtres auto-adaptatifs précités 18 et 19.

En se reportant maintenant à la figure 2, le filtre auto-adaptatif représenté est par exemple le filtre 18, étant bien entendu que l'autre filtre 19 lui est strictement identique. Sur ce schéma, le symbole numérique complexe entrant dans le filtre à l'instant kT (k étant un nombre entier) est désigné par la notation x(k), celui qui y était entré à l'instant (k - 1)T est désigné par la notation x (k - 1),..., celui qui y était entré à l'instant (k - i)T est désigné par x (k - i),..., et celui qui y était entré à l'instant (k - n)T est désigné par x (k - n). Pour faciliter la compréhention, on a désigné sur cette figure par les références k, k - 1, k - 2,..., k - i,..., k - n, les points du filtre 18 où sont présents, à l'instant kT, les échantillons précités x (k), x (k - 1), x (k - 2),..., x (k - i),..., x (k - n). Chacun de ces points sont séparés, de manière en soi très classique pour un filtre auto-adaptatif, par des circuits à retard R1, R2,..., qui introduisent chacun un retard égal à la période du signal H d'échantillonnage, soit T dans cet exemple précis (en cas de suréchantillonnage, ils introduisent, bien entendu, chacun un retard inférieur à T).

De manière connue, ces échantillons numériques complexes x (k) à x (k - n) sont chacun appliqués à une entrée d'un multiplicateur respectif Mo, M1, M2,..., Mi,..., Mn, qui reçoit sur son autre entrée le coefficient respectif Co, C1, C2,..., Ci,..., Cn en provenance du dispositif de calcul des coefficients 20 (figure 1). Les sorties respectives So, S1, S2,..., Si,..., Sn de ces multiplicateurs Mo à Mn sont, quant à elles, classiquement appliquées à un sommateur 50, qui délivre sur sa sortie le signal 24 égalisé.

Conformément à l'autre aspect essentiel de l'invention, chacun des coefficients Co, C1, C2,..., Ci,..., Cn du filtre est actualisé, par le circuit 20 précité, à chaque instant kT, au moyen de la formule suivante :

Ci (k) = Ci (k - 1) - μ . y (k - 1) . x (k - i) * . e (k)

dans laquelle :

. Ci (k) est la valeur prise par le coefficient Ci à cet instant kT.

. Ci (k - 1) est la valeur qu'avait prise ce même coefficient Ci à l'instant (k - 1)T, et qu'il avait donc conservé dans l'intervalle de temps compris entre (k - 1)T et kT

. μ est un nombre réel positif, très inférieur à 1 et qui définit la vitesse d'adaptation filtre 18 ; par exemple, ce coefficient μ est de l'ordre de 0,001

. y (k - 1) est le signal de sortie du filtre à l'instant (k - 1)T

. x (k - i) * est la valeur complexe conjuguée de l'échantillon prédéfini x (k - i), qui est présent au point (k - i) précité à cet instant kT

. et e (k) est l'erreur e précitée, présente sur le fil 35 à cet instant k T.

Comme il va de soi, l'invention n'est pas limitée à l'exemple de réalisation qui vient d'être décrit. Elle s'applique aussi bien à une réception en diversité 1 (à une seule voie) qu'à une réception en diversité supérieure à 2. Toutefois, surtout en cas de transmission sur canal troposphérique, la transmission en diversité supérieure ou égale à 2 est préférentielle pour pallier aux phénomènes d'évanouissement du signal.

Cet égaliseur peut aussi fonctionner, de façon avantageuse, en suréchantillonnage, principe bien connu pour les égaliseurs en démodulation cohérente. La modification à apporter aux figures 1 et 2 est alors aisément déductible des systèmes connus fonctionnant en démodulation cohérente. Le choix de l'échantillonnage synchrone dans la description a été effectué pour rendre plus clair l'exposé de cet exemple particulier.

## Revendications

1. Dispositif d'égalisation auto-adaptative pour installation de démodulation différentiellement cohérente, caractérisé en ce qu'il comporte, pour chaque voie de réception (1, 2), un filtre auto-adaptatif (18, 19) placé en amont du démodulateur différentiel (16, 17) équipant cette voie, et en ce que ce filtre auto-adaptatif (18, 19) est associé à un dispositif (20, 21) de calcul de ses coefficients (Co, C1, C2,..., Ci,..., Cn) qui reçoit l'erreur (e) provenant du dispositif de décision et de calcul d'erreur (32, 34) situé en aval de ce démodulateur différentiel, qui reçoit le signal de sortie y (k) de ce filtre auto-adaptatif, et qui actualise, à chaque instant kT égal à un multiple (k) de l'espace inter-symboles initial (T), chaque coefficient (Co, C1, C2,..., Ci,..., Cn) de ce filtre auto-adaptatif selon la formule : Ci (k) = Ci (k - 1) - μ . y (k - 1) . x (k - i) * . e (k) dans laquelle : Ci (k) est la valeur donnée à ce coefficient (Ci) à l'instant kT ; Ci (k - 1) est la valeur qu'avait prise ce même coefficient (Ci) à l'instant (k - 1)T ; μ est un nombre réel positif très inférieur à 1 et définissant la vitesse d'adaptation du filtre ; y (k - 1) est le signal de sortie du filtre à l'instant (k - 1)T ; x (k - i) * est la valeur complexe conjuguée de l'échantillon x (k - i) présent dans le filtre à cet instant kT et relatif à ce coefficient (Ci), et e (k) est l'erreur précitée à cet instant kT.

2. Dispositif d'égalisation auto-adaptative selon la revendication 1, caractérisé en ce que le nombre réel positif (μ) qui définit la vitesse d'adaptation du filtre auto adaptatif (19, 20) a une valeur de l'ordre de 0,001.

## Claims

1. A self-adaptive equalizer circuit for an installation for differentially coherent demodulation, the circuit being characterized in that it comprises, on each reception path (1, 2), a self-adaptive filter (18, 19) placed upstream from the differential demodulator (16, 17) on said path, and in that the self-adaptive filter (18, 19) is associated with a unit (20, 21) for calculating its coefficients (C0, C1, C2, ..., Ci, ..., Cn) which receives the error (e) from the decision and error calculation circuit (32, 34) which is situated downstream from the differential demodulator and which receives the output signal y(k) from said self-adaptive filter, the coefficient-calculating unit updating each coefficient (C0, C1, C2, ..., Ci, ..., Cn) of said self-adaptive filter at each instant kT equal to a multiple (k) of the initial intersymbol spacing (T), with the coefficient being calculated using the equation:

Ci(k) = Ci(k - 1) - μ.y(k - 1).x(k - i)*.e(k)

in which:

Ci(k) is the value given to this coefficient Ci at instant kT; Ci(k - 1) is the value taken by the same coefficient Ci at the instant (k - 1)T; $\mu$ is a positive real number very much less than 1 and defines the rate of adaptation of the filter; y(k - 1) is the output signal from the filter at instant (k - 1)T; x(k - i)* is the complex conjugate value of the sample x(k - i) present in the filter at said instant kT and relating to the coefficient (Ci); and e(k) is the above-mentioned error at the instant kT.

2. A self-adaptive equalizer circuit according to claim 1, characterized in that the positive real number ($\mu$) defining the rate of adaptation of the self-adaptive filter (19, 20) has a value of about 0.001.

**Patentansprüche**

1. Selbstanpassende Entzerrervorrichtung für eine Anlage mit differential kohärenter Demodulation, dadurch gekennzeichnet, daß sie für jeden Empfangskanal (1, 2) ein selbstanpassendes Filter (18, 19) enthält, das vor dem Differentialdemodulator (16, 17) dieses Kanals liegt, und daß dieses selbstanpassende Filter (18, 19) einer Vorrichtung (20, 21) zur Berechnung seiner Koeffizienten (C0, C1, C2, ... Ci, ... Cn) zugeordnet ist, die den Fehler (e) von der Vorrichtung zur Entscheidung und zur Fehlerberechnung (32, 34), die hinter dem Differentialdemodulator liegt, und weiter das Ausgangssignal y(k) dieses selbstanpassenden Filters empfängt und in jedem Zeitpunkt kT gleich einem Vielfachen (k) des ursprünglichen Abstands (T) zwischen Symbolen jeden Koeffizienten (C0, C1, C2, ... Ci, ... Cn) dieses selbstanpassenden Filters gemäß folgender Formel aktualisiert:

$$Ci(k) = Ci(k-1) - \mu.y(k-1).x(k-i)^*.e(k)$$

wobei bedeutet:
- Ci(k) den Wert dieses Koeffizienten (Ci) zum Zeitpunkt kT;
- Ci(k-1) den Wert desselben Koeffizienten (Ci) zum Zeitpunkt (k-1)T;
- $\mu$ eine reelle positive Zahl, deutlich kleiner als 1, die die Anpassungsgeschwindigkeit des Filters definiert;
- y(k-1) den Wert des Ausgangssignals des Filters zum Zeitpunkt (k-1)T;
- x(k-i)* den komplex konjugierten Wert der Tastprobe x(k-i), der sich in dem Filter zum Zeitpunkt kT befindet und auf den Koeffizienten (Ci) bezieht;
- e(k) den Wert des Fehlers zu diesem Zeitpunkt kT.

2. Selbstanpassende Entzerrervorrichtung nach Anspruch 1, dadurch gekennzeichnet, daß die reelle positive Zahl ($\mu$), die die Anpassungsgeschwindigkeit des selbstanpassenden Filters (19, 20) definiert, einen Wert in der Größenordnung von 0,001 besitzt.

**Fig.1**

EP 0 376 250 B1

**Fig. 2**